# FASCICULE DE BREVET EUROPEEN

(11) **EP 1 308 116 B1**
(45) Date de publication et mention de la délivrance du brevet: **15.09.2004**
(21) Numéro de dépôt: 02292684.4
(22) Date de dépôt: 29.10.2002
(51) Int. Cl.: A47J 39/00

(54) **Chariot destiné à être accouplé à un module de production d'air par convection forcée**
Wagen zum Verbinden mit einem Modul für Luftproduktion durch Zwangskonvektion
Carriage to be coupled to a module of production of air by forced convection

(30) Priorité: 30.10.2001 FR 0114013
(43) Date de publication de la demande: 07.05.2003
(73) Titulaire: Société Industrielle de Production de l' Aube, 10130 Saint-Phal (FR)
(72) Inventeur: Meyer, Jean-Christophe, 10120 Saint-Andre-Les-Vergers (FR); Fabre, Jean, 10000 Troyes (FR)
(74) Mandataire: Eidelsberg, Victor Albert

(56) Documents cités:
- WO-A-00/54641
- FR-A- 2 652 885
- US-A- 4 254 824
- US-A- 5 655 595
- US-A- 5 975 202

## Description

La présente invention concerne les chariots et, plus particulièrement, ceux destinés à distribuer des plateaux repas dans les collectivités.

Par WO 0054 641 A, on connaît déjà un chariot suivant le préambule de la revendication 1.

Ce chariot a deux inconvénients. Le premier est de nécessiter que le module ait une dimension coïncidant avec celle d'une porte et soit donc de grande dimension, et notamment relativement haut, puisque les dimensions d'une porte de chariot sont régies par la nécessité de pouvoir enlever tous les plateaux de la rangée se trouvant en regard de cette porte. Le second inconvénient est qu'il est dangereux en étant source de brûlures.

L'invention remédie à ces deux inconvénients par un chariot suivant la partie caractéristique de la revendication 1. Il s'accommode d'un module de production d'air par convection forcée de dimension différente et notamment plus petit et tout particulièrement plus bas que lui, en formant un ensemble suivant les revendications 2 à 5.

Suivant un mode de réalisation, les moyens de mise en communication du module avec l'intérieur de la caisse comportent au moins deux trous ménagés dans la première face verticale dont l'un communique avec un diffuseur à l'intérieur de la caisse y définissant un espace fermé et ayant des orifices de sortie débouchant respectivement au- dessus de chaque plateau, tandis que l'autre trou communique directement avec l'intérieur de la caisse. Ce mode de réalisation permet non seulement de diminuer considérablement la dimension, et tout particulièrement la hauteur du module, puisque l'on se contente maintenant de deux trous par lesquels il devra communiquer avec le chariot, mais aussi de faciliter considérablement l'accostage et l'étanchéité du module lors de son accouplement au chariot. De préférence, les deux trous sont dans la partie basse de la première face verticale.

L'un au moins des trous et, de préférence, les deux trous est muni d'un volet d'obturation actionné à l'ouverture par un dispositif de détection de la présence d'un module accouplé au chariot. Le chariot est ainsi toujours fermé si un module n'est pas accouplé et on ne craint pas que des pollutions puissent entrer dans le chariot par les trous prévus pour l'accouplement du module. Pour plus de sécurité, il est prévu un organe de verrouillage à un module.

Suivant l'invention, il est prévu une ligne électrique sortant du chariot et une ligne électrique y entrant, ainsi qu'un interrupteur sur l'une des lignes commandé à la fermeture par le dispositif de détection de la présence d'un module de façon que le circuit électrique du chariot, au moins pour ce qui concerne la modification de la température régnant dans la caisse, n'est fermé que si un module est accouplé au chariot et, réciproquement, un module ne peut fonctionner que s'il est accouplé à un chariot en sorte que l'on est sûr qu'un module ne refoulera pas de l'air, par exemple très chaud à 65°C à l'extérieur avec les dangers que cela comporte.

L'invention vise également l'ensemble d'un module et d'un chariot suivant invention et notamment un ensemble de ce genre dans lequel au moins une partie du circuit électrique de commande du module fait partie du circuit électrique de commande du chariot. Cela permet de simplifier le circuit électrique du module en tirant partie du circuit électrique du chariot qui doit être présent de toute façon.

De préférence, le module est moins haut que le chariot et, de préférence, le module est mobile en étant par exemple monté sur roulettes.

Au dessin annexé, donné uniquement à titre d'exemple :
la figure 1 est une vue en élévation d'un ensemble d'un chariot et d'un module de production d'air par convection forcée suivant l'invention,
la figure 2 est une vue en plan d'un premier mode de réalisation d'un chariot suivant l'invention,
la figure 3 est une vue en perspective de la partie du chariot suivant l'invention qui est tournée vers le module,

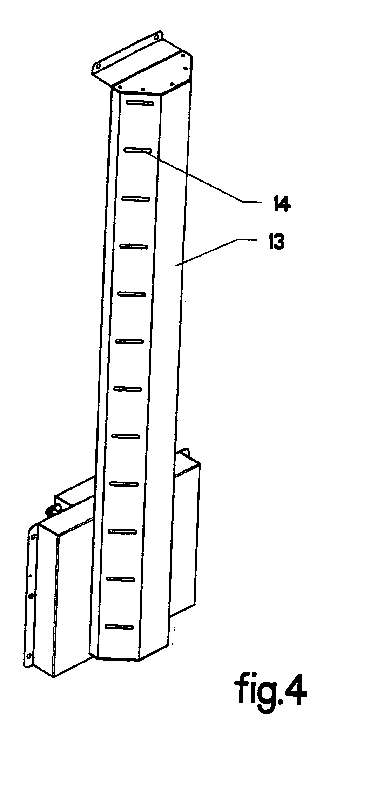

la figure 4 est une vue en perspective du diffuseur et
la figure 5 est un schéma du circuit électrique de l'ensemble du chariot et du module suivant l'invention.

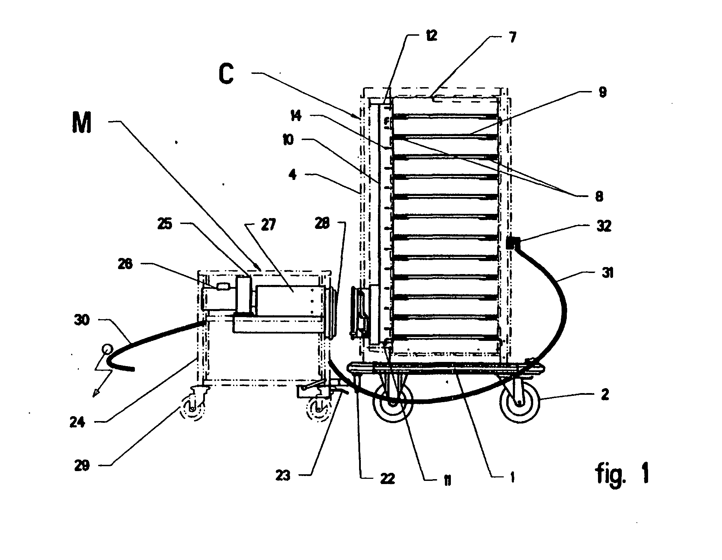

L'ensemble représenté à la figure 1 comprend un chariot, désigné par la référence générale C, et un module, désigné par la référence générale M.

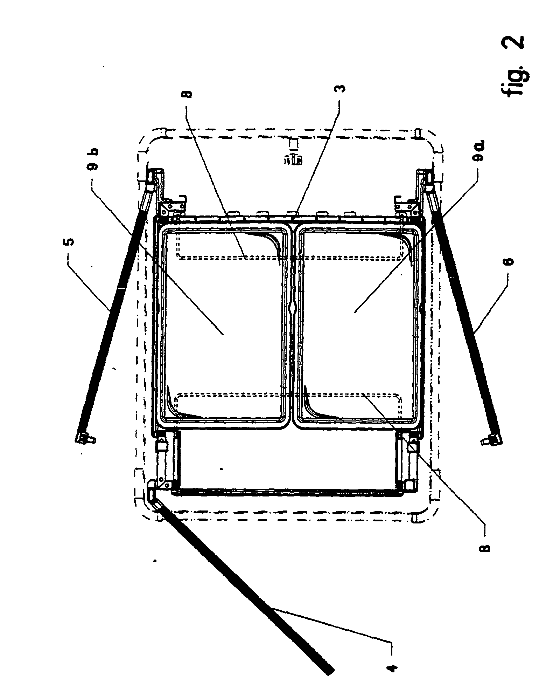

Le chariot comprend une plate-forme 1 montée sur roulettes 2. La plate-forme 1 porte une caisse parallélépipédique ayant (figure 2) deux premières faces 3, 4 verticales opposées et deux secondes faces verticales 5, 6 opposées. La caisse est fermée en haut par un toit 7. Chacune des faces 5 et 6 est constituée sous la forme d'une porte.

La caisse contient, montés glissant horizontalement sur des supports 8 horizontalement et parallèlement aux deux premières faces 3 et 4 verticales, des plateaux 9 superposés en au moins deux piles 9a, 9b.

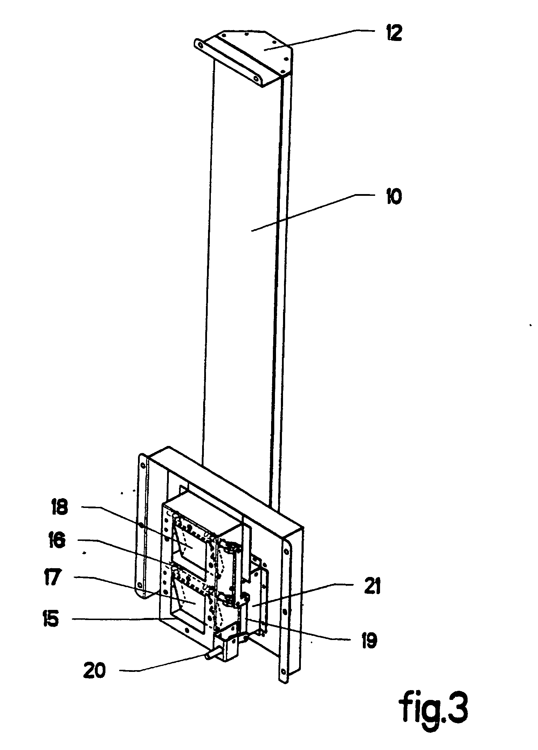

Alors qu'à la figure 2, la face 4 verticale est sous la forme d'une porte, à la figure 1, cette face est constituée par une paroi délimitant extérieurement un espace 10 formant diffuseur. Cet espace est délimité vers le bas par un fond 11, se trouvant à un niveau inférieur au support 8 le plus bas, et en haut par une paroi 12 supérieure se trouvant à un niveau supérieur au support et donc au plateau le plus haut et par une cloison 13 intérieure tronconique en regard de la face 4. Dans cette cloison 13 sont ménagées des fentes 14. Chaque fente 14 débouche respectivement entre deux supports 8 ou entre le support 8 le plus haut et le toit 7. La face 4 comporte vers le bas deux trous, à savoir un trou 15 inférieur et un trou 16 supérieur (figure 3).

Chaque trou 15 et 16 peut être obturé par un volet 17, 18 qui peuvent être actionnés à l'ouverture par un mécanisme 19 à levier mû par un poussoir 20. Le trou 16 communique directement avec l'intérieur de la caisse où se trouvent les plateaux et supports 8, tandis que le trou 15 communique par un caisson 21 étanche avec l'espace 10. Le poussoir 20 joue le rôle d'un dispositif de détection de la présence d'un module M accouplé au chariot C en étant poussé lors de l'accostage du module M.

II est prévu, en outre, sur le chariot C un organe 22 de verrouillage sous la forme d'une tige destinée à s'accrocher avec possibilité de libération dans un organe 23 conjugué du module M.

Le module M comporte un caisson 24 étanche dans lequel est monté un ventilateur 25 et son moteur 26 et une unité 27 de production d'air chaud ou d'air froid. Le caisson 24 comporte au même niveau que les trous 15 et 16, des trous correspondants entourés d'un joint 28 d'étanchéité en sorte que lorsque le module M est accouplé au chariot C, les trous du module M viennent respectivement en coïncidence avec les trous 15 et 16 d'une manière étanche. De l'air chauffé ou refroidi peut ainsi entrer par le conduit 15 en étant refoulé par le ventilateur 25 dans le diffuseur 10, de là, passer par les fentes 14 le long de chaque plateau 9 supporté par un support 8, refroidir ou chauffer les mets qui s'y trouvent et revenir dans le caisson 24 par l'intermédiaire du trou 16 et du trou conjugué du caisson 24. L'air circule ainsi en circuit fermé.

Le caisson est monté sur des roulettes 29 et comporte une alimentation 30 électrique.

Le caisson comporte en outre un câble 31 qui mène à une prise 32 faisant partie du circuit électrique du chariot.

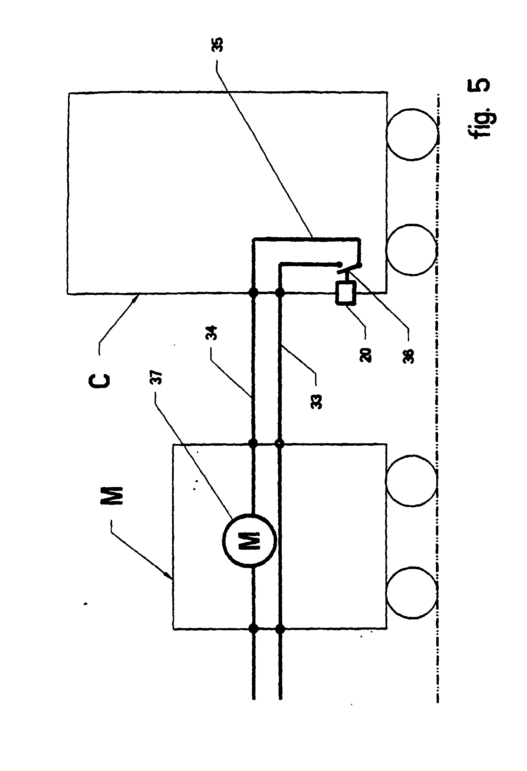

Ce circuit, qui est représenté schématiquement à la figure 5, comprend, passant par le câble 31, une ligne 33 entrant dans le chariot C et une ligne 34 en sortant. Le circuit électrique 35 du chariot comporte un interrupteur 36 commandé par le poussoir 20. Les lignes 33 et 34 sortent et arrivent dans le module M où se trouve un circuit 37 de mise sous tension du moteur 26 du ventilateur 25. De l'air chaud ne peut pas être refoulé par le ventilateur 25 tant que le module n'est pas accouplé au chariot. De l'air chaud n'est pas refoulé à l'extérieur avec les dangers que cela comporte.

## Revendications

1. Chariot (C) comprenant une caisse contenant des plateaux (9) et un dispositif de modification de la température régnant dans la caisse destiné à être accouplé à un module (M) extérieur au chariot (C) de production d'air par convection forcée et comprenant des moyens (10, 15, 16) de mise en communication suivant un circuit fermé du module (M) avec l'intérieur de la caisse, qui comprennent au moins deux trous (15, 16) l'un au moins des trous (15, 16) et, de préférence, les deux trous (15, 16) étant muni d'un volet (17, 18) d'obturation actionné à l'ouverture par un dispositif (20) de détection de la présence d'un module (M) accouplé au chariot (C), **caractérisé par** une ligne (34) électrique sortant du chariot (C), par une ligne (33) électrique entrant dans le chariot (C) et par un interrupteur (36) sur l'une des lignes commandé à la fermeture par le dispositif (20) de détection de la présence d'un module (M).

2. Ensemble d'un chariot et d'un module, **caractérisé en ce que** le chariot est tel que défini à la revendication 1.

3. Ensemble suivant la revendication 2, **caractérisé en ce qu'**au moins une partie du circuit électrique de commande du module (M) fait partie du circuit électrique de commande du chariot (C).

4. Ensemble suivant la revendication 2 ou 3, **caractérisé en ce que** le module (M) est moins haut que le chariot (C).

5. Ensemble suivant l'une des revendications 2 à 4, **caractérisé en ce que** le module (M) est mobile.

## Patentansprüche

1. Wagen (C) mit einem Kasten, welcher Böden (9) beziehungsweise Tabletts und eine Einrichtung zur Änderung der Temperatur aufweist, die in dem Kasten herrscht, welcher zum Ankuppeln an ein außerhalb des Wagens (C) befindliches Modul (M) zur Lufterzeugung durch erzwungene Konvektion vorgesehen ist und Einrichtungen (10, 15, 16) zur Verbindungsherstellung eines geschlossenen Kreislaufs des Moduls (M) mit dem Inneren des Kastens aufweist, welche mindestens zwei Öffnungen (15, 16) aufweisen, wobei wenigstens eine der Öffnungen (15, 16), und vorzugsweise die beiden Öffnungen, (15, 16) mit einer Verschlussklappe (17, 18) ausgerüstet sind, die zum Öffnen von einer Einrichtung (20) zur Abtastung des Vorhandenseins eines an den Wagen (C) angekuppelten Moduls (M) betätigt ist, **gekennzeichnet durch** eine elektrische Leitung (34), die aus dem Wagen (C) herausgeht, **durch** eine elektrische Leitung (33), die in den Wagen (C) hineingeht, und **durch** einen Schalter (36) in einer der Leitungen, welcher zum Schließen **durch** die Einrichtung (20) zur Abtastung des Vorhandenseins eines Moduls (M) gesteuert ausgebildet ist.

2. Anordnung eines Wagens und eines Moduls, **dadurch gekennzeichnet, dass** der Wagen eine Ausführung nach Anspruch 1 ist.

3. Anordnung nach Anspruch 2, **dadurch gekennzeichnet, dass** mindestens ein Teil des elektrischen Steuerstromkreises des Moduls (M) zum elektrischen Steuerstromkreis des Wagens (C) gehört.

4. Anordnung nach Anspruch 2 oder 3, **dadurch gekennzeichnet, dass** das Modul (M) weniger hoch ist als der Wagen (C).

5. Anordnung nach einem der Ansprüche 2 bis 4, **dadurch gekennzeichnet, dass** das Modul (M) beweglich ist.

## Claims

1. Trolley (C) which comprises a housing containing trays (9) and a device for adjusting the temperature within the housing intended to be coupled to a module (M), external to the trolley (C), for producing air by forced convection, and which comprises means (10, 15, 16) for placing the module (M) in communication, in a closed circuit, with the inside of the housing, these means comprising at least two holes (15, 16), at least one of the holes (15, 16), preferably both (15, 16), having a shut-off flap (17, 18) opened by a device (20) for detecting the presence of a module (M) coupled to the trolley (C), the said trolley being **characterized by** an electrical line (34) leaving the trolley (C), by an electrical line (33) entering the trolley (C), and by a switch (36) on one of the lines which is closed by the device (20) for detecting the presence of a module (M).

2. Assembly of a trolley and a module, **characterized in that** the trolley is as defined in Claim 1.

3. Assembly according to Claim 2, **characterized in that** at least part of the electrical control circuit for the module (M) forms part of the electrical control circuit for the trolley (C).

4. Assembly according to Claim 2 or 3, **characterized in that** the module (M) is lower than the trolley (C).

5. Assembly according to one of Claims 2 to 4, **characterized in that** the module (M) is mobile.
